# EUROPEAN PATENT APPLICATION

(11) **EP 1 637 445 A1**
(43) Date of publication of application: **22.03.2006**
(21) Application number: 03817207.8
(22) Date of filing: 20.06.2003
(51) Int. Cl.: B62M 3/06, B62H 7/00, B62M 9/08

(54) **PEDALING CORRECTION DEVICE FOR BICYCLE**

(71) Applicant: Matsumoto, Hitoshi, Nagaokakyo-shi, Kyoto 617-0814 (JP)
(72) Inventor: Matsumoto, Hitoshi, Nagaokakyo-shi, Kyoto 617-0814 (JP)
(74) Representative: Gritschneder, Martin
(86) International application number: PCT/JP2003/007898
(87) International publication number: WO 2004/113157

(57) **Abstract**

A pedaling correction device for a bicycle capable of objectively detecting the state of pedaling and assisting the detection so that the training of pedaling technique can be performed according to an accurate theory, wherein cranks having pedals mounted at the tips thereof are installed on the center axis of the device so that a crank gear can be rotated according to the rotation of the cranks, the state of the pedaling of a user is monitored, the shape of the crank gear is deformed so that, when the cranks reach positions where the user must increase forces applied to the pedals, the vertical diameter of the crank gear can be increased and, when the cranks reach positions where the user must release forces applied to the pedals, the vertical diameter of the crank gear can be reduced, whereby the correction of habit of pedaling can be assisted by using such a crank gear.

## Description

### Technical Field

The present invention relates to an assist device used for training for a so-called pedaling technique to pedal a bicycle efficiently and speedily.

### Background Art

First, an outline of the general power transmission mechanism in bicycle is given.

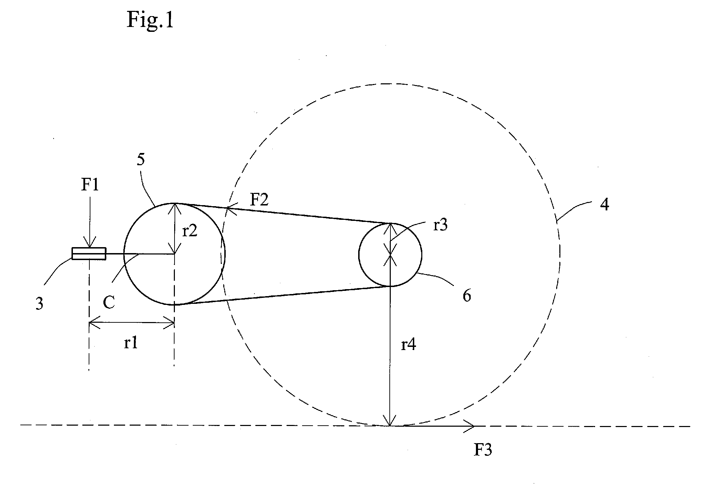

FIG. 1 shows a drive system of a bicycle. In the figure, arrows F1 to F3 represent a transmission direction of a drive force, respectively, whereas r1 to r4 represent a length of a crank C, a distance between a top dead center and a central axis of a crank gear 5, a radius of a hub gear 6 and a radius of a rear wheel 4, respectively.

As shown in FIG.1, the bicycle is driven by converting a reciprocating motion of the legs into a rotating motion. In this process, the leg motion is magnified based on a ratio between the radii of the crank gear 5 and the hub gear 6 mounted on a central axis of the rear wheel 4, or based on a leverage, and is finally transmitted to the rear wheel. The leverage is decided by r2/r3. If the leverage is great, the motion is magnified greatly while a correspondingly greater force is required. The "great magnification of the motion" corresponds to a distance that one pedal stroke permits the bicycle to travel. The "required great force" means that a great torque or pedaling force is required. To put it in the other way, the required great force makes a cyclist physically experience heavy pedaling.

In short, the smaller the radius r3 or conversely the greater the radius r2, the heavier pedaling experienced by the cyclist.

Next, the conventional training method for pedaling technique is described in due order.

In general, the cyclist exerts pressure upon the pedal easily while the crank is rotated from the top dead center to a horizontal position. Specifically, the exertion of pressure upon the pedal is facilitated while the crank is in the angular range of ±45° with respect to the horizontal line passing through the central axis of the crank gear. It is known in theory that an input torque associated with the pedaling force is at maximum when the crank is substantially horizontally positioned. It is also known that when the crank is located in the vicinity of the top or bottom dead center, the pressure exerted vertically upon the pedal is not converted into the rotating motion of the wheel.

In order to achieve a goal of riding the bicycle speedily without wasting power uselessly, the pedaling may be performed in a manner that the pressure is not exerted upon the pedal when the crank is located in the vicinity of the top/bottom dead center whereas the maximum pressure is exerted upon the pedal when the crank is substantially horizontally positioned. In order to achieve this goal, the cyclist needs to practice until the cyclist can bodily sense a point to exert the pressure upon the pedal in the form of, for example, "so-and-so crank angular position".

The motion for efficiently and speedily riding the bicycle is generally called "pedaling technique" or simply called "pedaling". Bicycle enthusiasts, triathletes, professional cyclists and the like have trainings for the pedaling technique on a daily basis.

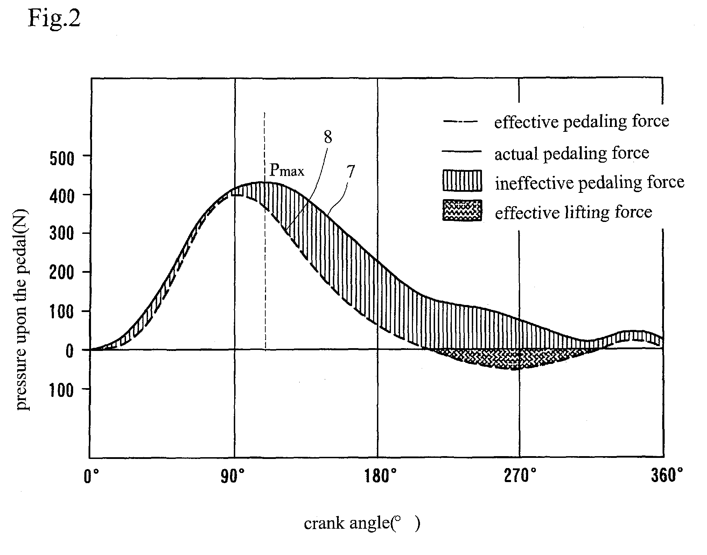

It has heretofore been known that the variations of the pedaling force applied by the cyclist's legs in one pedal stroke are related with the crank angular positions, as shown in FIG.2. As seen from the figure, a pedaling force curve 7 related to a common cyclist (represented as "actual pedaling force" in the figure) differs greatly from an idealistic curve 8 (represented as "effective pedaling force" in the figure). A point Pₘₐₓ at which the cyclist actually exerts the maximum pressure upon the pedal is greatly shifted (lagged) from an idealistic crank angular position of 90° (provided that the top dead center is at 0° and a rotational direction of the crank is positive). Hence, all the pressure upon the pedal is not transmitted as the drive force to the road surface. As shown in the figure, the actual pedaling force of the cyclist is divided into an "available pedaling force" (effective pedaling force) and an "unavailable pedaling force" (ineffective pedaling force). Only the effective pedaling force contributes to the driving of the bicycle whereas the ineffective pedaling force is totally useless, simply wasting the cyclist's stamina.

Therefore, a major concern of those having the training for pedaling is how to approximate their pedaling force curves to the idealistic curve 8 shown in FIG.2 by reducing the ineffective pedaling force as much as possible.

As described above, it is idealistic that the cyclist can continue pedaling without producing the ineffective pedaling force. In actual fact, however, the following problems are encountered. (a) In most cases, the cyclist is too late or too early to exert the pressure upon the pedal so that the peak of the pedaling force does not correspond to the crank angular position of 90°. (b) There are also many cases although the cyclist may stop exerting the pressure upon the pedal where the crank passing through the crank angular position of 90°, the cyclist actually cannot stop pressing down on the pedal after the passage through the crank angular position of 90°, so as to increase only the ineffective pedaling force.

Conventionally, the correction of such pedaling inclinations or pedaling characteristics of individual cyclists (individual variability) substantially to the idealistic pedaling conditions solely relies upon an expert trainer who, for example, practically observes how each cyclist pedals the bicycle and then takes a seat-of-the-pants approach to coach the cyclist. Therefore, it is difficult for each cyclist undergoing the training to determine whether or not the cyclist has accomplished the pedaling motion exactly following the theory. This is disadvantageous to the cyclist whereas the trainer is not convincing enough to train the cyclist.

That is, although the cyclist understands the theory, it is difficult for the cyclist to unconsciously and continuously perform the following motion for long hours when actually pedaling the bicycle on the road, the motion wherein the maximum pressure is exerted upon the pedal of the crank positioned substantially horizontally and the pressure is not exerted on the pedal of the crank positioned otherwise. This dictates need to practice until the cyclist can bodily sense a crank position to start exerting the pressure upon the pedal in one pedal stroke. However, an assist device adapted to permit an objective determination of the pedaling conditions and capable of providing an effective support of the training for the pedaling technique has never been put to practical use for long periods of time since the bicycles came into widespread use as moving means for the general people. Conventionally, the only way for the individuals to accomplish the idealistic pedaling motion was to learn from their experiences. Furthermore, even in a case where the trainer trains for such a practical skill, the individual variability makes it difficult to give training based on objective and exact determination.

In view of the foregoing, the invention has an object to solve the problem that there has been no available method of acquiring the pedaling technique without relying upon the conventional approach based on the intuition and efforts of the individuals, and to provide a pedaling training assist device capable of fully dealing with the individual variability. That is, a problem to be solved by the invention is to provide a device which provides the objective determination of the pedaling conditions and which assists in the training for the pedaling technique based on the correct theory.

The inventors have found the following facts to accomplish the invention. If the distance r2 between the top dead center and the central axis of the crank gear can be physically varied during one pedal stroke, the leverage (radius ratio) is varied to vary the torque on the crank, whereby the cyclist can be properly made to experience the heavy pedaling and light pedaling at different crank angular points during one pedal stroke. Furthermore, the assist for the pedaling correction may be provided by utilizing these crank angular points providing the heavy pedaling and light pedaling. The use of this device can bear a result that the cyclist learns to demonstrate the efficient pedaling technique thus acquired.

That is, the inventors have found (1) that if the bicycle crank mechanism, which has been improved only for the purpose of providing smooth riding, is used rather for the sake of making the cyclist to experience the heavy pedaling at a crank angular point at which the torque inputted by the cyclist is low, the point for the cyclist to increase the torque input may be indicated to the cyclist by way of the physical experience of the heavy pedaling. The inventors have also found (2) that such an elliptical crank gear for bicycle may be adapted to the individual variability of the cyclist or individually different use modes such as race categories by suitably adjusting or varying parameters of the crank gear which include (i) outside configuration; (ii) ellipticity; (iii) crank mounting position; and the like. Based on these findings, the inventors have accomplished the invention wherein a cycling machine or bicycle equipped with such a modified crank gear is used as a pedaling training assist device for providing an effective assist in the pedaling training and the pedaling training based on the objective determination.

### Disclosure of the Invention

In accordance with the invention for solving the above problem, a bicycle-pedaling correction device comprising a crank gear having a crank with a pedal at its distal end mounted on a central axis thereof and rotating in conjunction with the rotation of the crank, wherein pedaling conditions of a cyclist are observed and a configuration of the crank gear is modified in a manner that a vertical radius of the crank gear is increased when the crank reaches a crank angular position where the cyclist needs to exert an increased pressure upon the pedal whereas the vertical radius of the crank is decreased when the crank reaches a crank angular position where the cyclist needs to reduce the pressure upon the pedal.

Thus, the invention provides the effective assist in the pedaling training utilizing the modified crank gear which is adapted to indicate the point for the cyclist to start exerting the pressure upon the pedal by allowing the cyclist to experience a varied torque, so as to urge the cyclist to exert the maximum pressure upon the pedal at the crank angular point at which the cyclist desires to and/or should exert the maximum pressure upon the pedal in one pedal stroke. The use of the invention offers an additional effect that the cyclist may be corrected for the pedaling inclination which poor the torque input at some crank angular point in one pedal stroke because the assist device of the invention urges the cyclist to increase the torque input at the crank angular point in question. While the invention uses the modified crank gear and the bicycle equipped with the same, which will be specifically described hereinlater, as means for allowing the cyclist to physically experience the specific torque variations, the bicycle may be replaced by a cycling machine.

### Brief Description of the Drawings

FIG. 1 is a diagram schematically showing a drive system of bicycle;
FIG.2 is a graphical representation of the variations of pedaling force of man's legs in one pedal stroke;
FIG.3 is a diagram showing a crank gear portion of a pedaling training assist device;
FIG. 4 is a side view showing an example of a modified crank gear;
FIG.5 is a block diagram showing one embodiment of the invention; and
FIG. 6 is a block diagram showing another embodiment of the invention.

### Best Modes for Carrying Out the Invention

A preferred embodiment of the invention will be described as below. It is noted that the invention is not limited to the following embodiments and examples.
i) First, the pedaling inclinations of each cyclist are examined before a modified crank gear for use in a pedaling training assist device of the invention is prepared for the cyclist. Specifically, measurement instruments including a pedal pressure sensor, a crank angle sensor and a logger are incorporated into a normal bicycle or cycling machine equipped with a normal crank gear of a circular shape. The pedaling inclinations of the cyclist are analyzed based on the measurement data obtained using these instruments. The measurement data may preferably be shown in a chart, for example, in which time is plotted on the abscissa whereas pedal pressure and crank angle corresponding thereto are plotted on the ordinate in parallel. If the chart also shows additional data on instantaneous torque value determined based on pedaling force data and the value of crank length, an objective determination on the pedaling conditions may be made more easily and correctly. The measurement data on the cyclist thus obtained are used for determining the pedaling inclinations of the cyclist, or particularly a point at which the torque input is extremely low during one pedal stroke. Furthermore, the measurement data are compared to determine other pedaling inclinations of the cyclist. Specifically, the determination is made as to what crank angular position is corresponded by a peak of the pedaling force of the cyclist in one pedal stroke, whether a pedaling start timing is too late or early in a case where the pedaling force peak does not correspond to the crank angular position of 90° or the horizontally positioned crank, whether or not the cyclist tends to be slow to stop pressing down on the pedal after the passage through the crank angular position of 90°.
ii) After the above measurements are taken, a particular point at which the torque input by the cyclist is low is determined in the form of, for example, the "so-and-so crank angular position". The modified crank gear for use in the pedaling correction assist device of the invention is prepared so as to correct the particular pedaling inclination by urging the cyclist to increase the torque input at the position in question. Specifically, the distance r2 between the top dead center and the central axis of the crank gear (see FIG.1) in correspondence to the point where the torque input is low is increased, such as to make the cyclist physically experience the heavy pedaling thereby drawing the cyclist's attention to the position in question. In a case where such a pedaling inclination of the cyclist is excessive, the configuration of the crank gear may be changed so much as to depart far from an elliptical shape.

In addition to the correction of the above weak point, the pedaling correction assist device of the present invention is also useful in correcting the drawback that the pedaling force peak does not correspond to the crank angular position of 90° or the drawback that the pedaling start timing is too late or early. If the cyclist is inclined to start pedaling in a lagged timing, the following procedure is taken. (1) First, a point at which the cyclist starts exerting the pressure upon the pedal is determined. (2) Subsequently, the modified crank gear is prepared as follows. In order to make the cyclist physically experience the heavy pedaling at a "forward point" (crank angular position) to the above point, the distance r2 between the top dead center and the central axis of the crank gear (see FIG.1) in correspondence to the "forward point" is increased, thereby urging the cyclist to start pedaling earlier. The aforesaid "forward point" may properly be selected or adjusted according to the pedaling inclinations of the cyclist. The modification is principally made on (1) an outside configuration of the modified crank gear based on ellipticity; and (2) mounting angles of right and left cranks (based on a relation with a long or short axis of the modified crank gear) . In a case where the cyclist is excessively lagged in the pedaling start timing, the ellipticity of the crank gear is increased. In an extreme case, the configuration of the modified crank gear may be changed so much as to eventually approximate to a lozenge shape departing far from the elliptical shape.

On the other hand, if the cyclist is inclined to be advanced in the pedaling start timing, a similar procedure to the above may be taken on a backward point.

To further clarify a rendering of a completed product of modified crank gear to be subjected to the preparation, it is preferred to prepare a "standard elliptical crank gear" of a standard configuration in advance. This standard elliptical crank gear may preferably be adjusted in a suitable manner thereby to provide a final modified crank gear dedicated to an individual cyclist.

The standard elliptical crank gear may preferably have the following features, for example. The features include: (1) the right and left cranks extended substantially in parallel to the short axis of the elliptical shape; (2) the ellipticity ranging from about 1.1 to about 1.3; and (3) a simple elliptical shape not having an arc locally expanded or retreated or not approximating to a lozenge shape. A gear preparation operation may be facilitated if the configuration of the modified crank gear for each cyclist, which is based on that of such a standard elliptical crank gear, is decided in accordance with the pedaling inclinations of the cyclist.
(b) Furthermore, the following correction may be made on the pedaling inclination that although the pedaling may be stopped after passage through the crank angular position of 90°, the cyclist cannot quickly stop pressing down on the pedal after the passage through the crank angular position of 90° so as to only increase the ineffective pedaling force. The correction may be accomplished by preparing the modified crank gear in a manner to make the cyclist physically experience an excessively light pedaling in conjunction with the crank passing through the angular position of 90°. Specifically, the distance r2 between the top dead center and the central axis of the crank gear in correspondence to the crank angular position of 90° (see FIG.1) is decreased so as to urge the cyclist to stop pressing down on the pedal.

Thus, the preparation of the modified crank gear dedicated to each cyclist is accomplished by way of the operations of taking measurements, determining the pedaling inclinations of the cyclist and preparing the gear according to the pedaling inclinations thus determined. The resultant crank gear may be mounted to a bicycle or cycling machine as will be specifically described in the following examples hereof. Then, the resultant bicycle or cycling machine is adapted to operate as a pedaling correction device contributing the improvement of the pedaling technique of the cyclist.

### Example 1

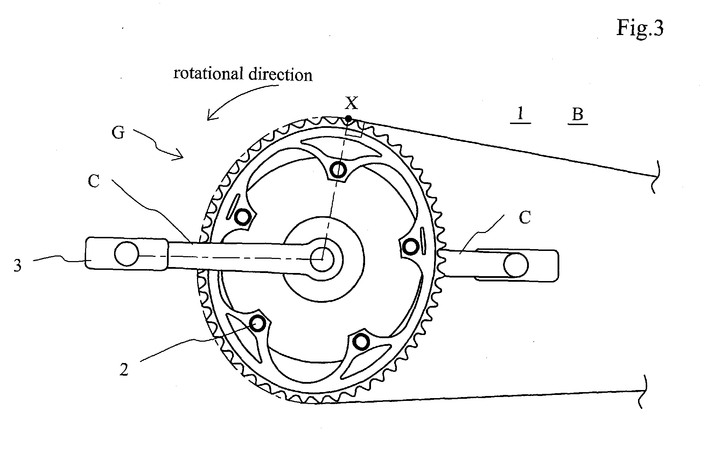

A flow of actual preparation of the modified crank gear dedicated to each cyclist and an embodiment wherein a bicycle equipped with the modified crank gear thus prepared is used for the pedaling training will be described as below. FIG.3 is a fragmentary view of a crank gear portion of a pedaling training assist device 1 according to one embodiment of the invention. A crank gear G shown in the figure is an example of the modified crank gear (standard type) fabricated based on necessary requirements decided according to a procedure described as below.

When a long axis of the modified crank gear G is in the vicinity of the top dead center as shown in FIG.3, a chain engages the crank gear as stretched aslant relative to the horizontal direction. Therefore, a start point of engagement with the chain is slightly shifted backward from the top dead center with respect to the rotational direction of the crank gear.

When the long axis of the crank gear G and the chain form a right angle at the start point of engagement with the chain (X-point), a torque transmitted from the crank gear to the chain is at maximum. In this example, therefore, a crank arm is set in a position slightly shifted forward from a short axis of the crank gear G so that the crank arm may be positioned horizontally when the right angle is formed between the long axis and the chain.

The pedaling training assist device 1 shown in FIG.3 includes the modified crank gear G and a bicycle B equipped with said modified crank gear G. The bicycle B is provided with a known looseness compensating device compensating for a looseness of the chain, which permits the chain to be assembled with the modified crank gear G.
i) First, how the pressure is exerted upon the pedal is determined by a trainer's observation or by mechanical measurement using a sensor or the like. In this example, necessary data are mechanically acquired by adding measurement means, including a pedal pressure sensor, a crank angle sensor and the like, to a bicycle or a cycling machine equipped with a normal crank gear. In this example, the measurements are taken on pedal pressure, crank angle, an input angle of pedaling force and the like.
ii) Next, the acquired data are processed to draw a graph showing (1) a distribution of pedaling force in one pedal stroke, in combination with (2) respective magnitudes of an effective pedaling force component and an ineffective pedaling force component, these components derived from the pedaling force inputted to the pedal (crank). The distribution of the pedaling force in one pedal stroke may be obtained by using the pedal pressure sensor in combination with the crank angle sensor.
iii) The graph obtained in the above step (ii) is analyzed to determine pedaling characteristics of the cyclist. According to this example, the pedaling characteristics mean the pedaling inclinations of the cyclist. The characteristics include the following cases: (1) lagged pedaling (the pedaling force reaches Maximum after the crank passes through the crank angular position of 90°) ; (2) advanced pedaling start timing (the pedaling force reaches Maximum before the crank passes through the crank angular position of 90°) ; (3) excessive ineffective pedaling force because the pedaling is not stopped after the passage through the crank angular position of 90°; and the like.
(iv) After the analysis, decision is made as to which of the parameters (ellipticity, crank mounting angle and the like) is varied in what way. Based on the decision thus made, the modified crank gear dedicated to each cyclist is prepared. A standard modified crank gear for pedaling correction purpose is an elliptical crank gear (standard elliptical crank gear), which has right and left cranks each extended from the center of the crank gear substantially in parallel to the short axis thereof. The crank gear may be suitably changed in configuration according to the pedaling inclinations of the cyclist or a racing category, whereby a modified elliptical crank gear not having a simple elliptical shape is provided. In this process, the above standard elliptical crank gear may be used as a prototype and how the prototype is modified may be decided. This approach provides an easy imaging of a completed crank gear dedicated to individual use.
   Before preparation of the modified crank gear dedicated to individual use, decision is made on the following matters:
   (1) At what angle the crank is to be mounted relative to the long or short axis of the elliptical shape;
   (2) ellipticity;
   (3) Provided that there is a difference between the pedaling forces of the right and left legs, whether or not the crank gear is to be asymmetrically configured so as to accommodate such a pedaling force difference; and
   (5) Provided that the crank gear does not necessarily have the elliptical shape depending upon the aforesaid pedaling inclinations, whether the crank gear is to be subjected to (a) partial modification or (b) overall modification. (a) The partial modification includes, for example, (i) protruding an arc portion further outwardly, and (ii) retreating the arc portion inwardly. (b) The overall modification includes, for example, a drastic transformation of the overall shape of the crank gear into a lozenge shape departing far from the elliptical shape.
(v) The crank gear is fabricated based on the requirements thus decided. The resultant crank gear may be mounted to a road bicycle so as to contribute to the improvement of the pedaling technique of the cyclist.

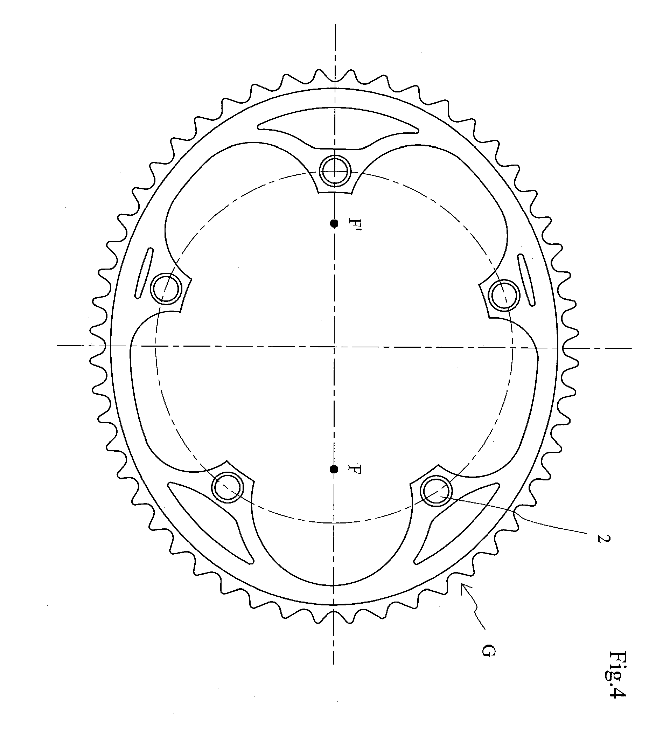

FIG. 4 illustrates one example of the modified crank gear G for use in the pedaling training assist device of the present invention. The modified crank gear G is an annular elliptical disk formed with teeth on an outside circumference thereof. The crank gear of this example is formed from, but not limited to, an aluminum alloy. That is, any material that ensures a sufficient strength may be used for forming the crank gear. The modified crank gear G may preferably be formed with mounting holes 2 on an inner periphery thereof at places located on a concentric circle about the central axis thereof as indicated by a dot-dash line in FIG.4, such that a circular crank gear normally mounted to the bicycle may readily be replaced by the modified crank gear. By varying the leverage (radius ratio) between the modified crank gear and the hub gear of the rear wheel, a definite indication may be given to the cyclist about the point where the pressure is to be exerted upon the pedal. A suitable value of the leverage is selected in consideration of individual variability such as of leg strength. As the ellipticity increases, the difference of generated torque is correspondingly increased. Hence, the higher ellipticity provides the more definite indication to the cyclist about the point where the pressure is to be exerted upon the pedal. However, if the ellipticity is increased excessively, the chain-looseness compensating device requires some mechanical contraption. Therefore, this example defines the ellipticity to be roughly in the range of 1.1 to 1.3.

### Example 2

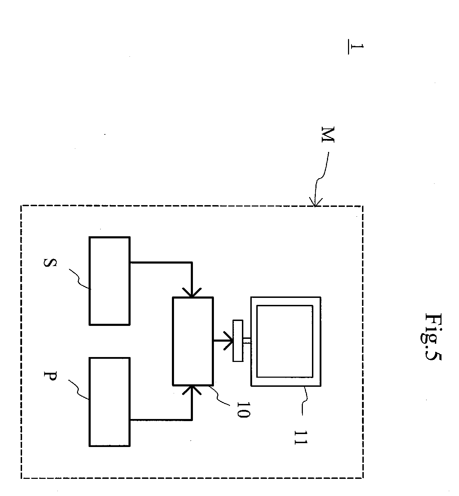

FIG.5 illustrates another example of the pedaling training assist device of the invention. This device includes a cycling machine M equipped with the modified crank gear G fabricated according to the above procedure. The machine also has a crank angle sensor S and a pedal pressure sensor Q mounted thereto. Output signals from these sensors are subjected to computation by a control unit 10 incorporated in the cycling machine M. Thus, a point Pₘₐₓ (see FIG.2) where the pressure actually exerted upon the pedal by the cyclist is at maximum is shown on a display 11 in the form of "so-and-so crank angular position", whereby the cyclist is informed of the cyclist's pedaling conditions. The display 11 is adapted to sequentially show an average value of Pₘₐₓ (crank angular position) or the like once in several crank strokes or at regular time intervals. The cycling machine M may be, for example, one installed at a fitness gym. This example employs the cycling machine adapted to apply a certain load on a pedal when a machine rider presses down on the pedal, similarly to the common bicycles.

Such a pedaling correction device provides real-time check for the effect of the pedaling training using the modified crank gear G or the progress of the training. Furthermore, such a device also permits the progress of the training of the cyclist to be systematically managed.

### Example 3

The example illustrates a telemetry system for determining the pedaling conditions. The system is principally used at a site of a track-like go-around course as a training field, where the cyclist actually rides the bicycle on the course while the system is operated for the purposes of (1) acquiring pedaling data, and (2) determining the pedaling inclinations, the results of the training and the like.

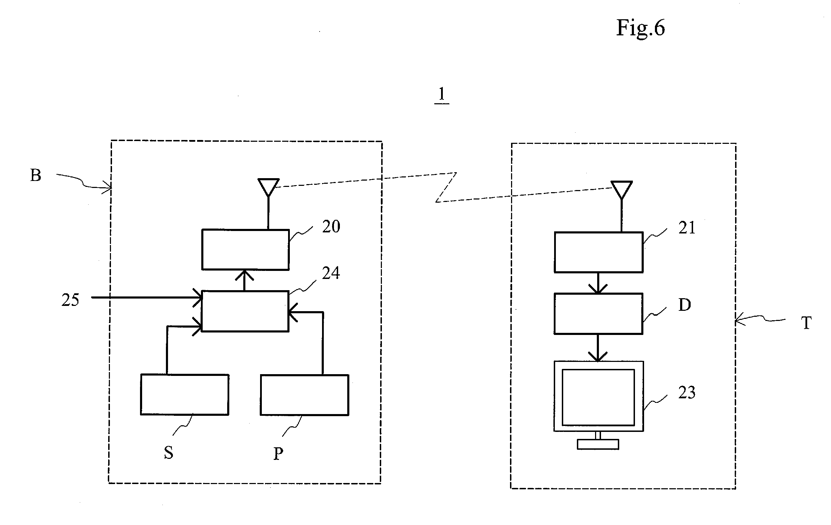

In the pedaling correction system 1 shown in FIG.6, the crank angle sensor S is mounted in a body of the bicycle B whereas the pedal pressure sensor Q is mounted to the pedal. The output signals from these sensors are supplied to a control unit 24, where processing is performed for determining the point Pₘₐₓ where the pressure actually exerted upon the pedal by the cyclist is at maximum. Subsequently, data indicative of the average value of the Pₘₐₓ (crank angular position) calculated from average data determined once in several crank strokes, for example, are transmitted from a transmitter 20 to a receiver 21 in a telemetry system T set at place externally of the bicycle. The data are recorded by and stored in a data logger D. The data are displayed on a real-time basis and can also be reproduced or replayed so as to be checked after training. In order to facilitate the data check, a signal 25 (track mark) sequentially indicating the passage through at least one point on the go-around course is transmitted to the telemetry system along with the Pₘₐₓ data. The telemetry system, in turn, stores the received average value of the Pₘₐₓ along with the track mark in the data logger D, while sequentially displaying the data on the display 23. In this example, the average value of the Pₘₐₓ and the track mark 25 are shown on the display in time sequence.

### Industrial Applicability

According to the invention, the ellipticity of the modified crank gear and the mounting angles of the right and left cranks relative to the long or short axis of the modified crank gear are varied according to the individual variability or the race category, whereby the point at which the cyclist is urged to start exerting the pressure upon the pedal in one pedal stroke can be adjusted freely. Hence, there may be provided the effective pedaling correction device having high versatility. The device is adapted to provide the heavy or light pedaling feeling simply by increasing or decreasing the radius r2 between the central axis and the top dead center of the crank gear as determined in correspondence to the desired point in one pedal stroke. This obviates the complication of the device structure.

The modified crank gear for use in the pedaling training assist device according to the present invention may be freely configured in accordance with each cyclist. Therefore, even a cyclist having the right and left legs exerting different pedaling forces or a cyclist starting exerting the pressure upon the right and left pedals at different crank angular positions may be effectively assisted in the pedaling training. Furthermore, the above modified crank gear may also be used as means for correcting such pedaling inclinations of the cyclists, for example. The modified crank gear having a standard configuration can adequately serve the correction function unless the pedaling inclination is excessive. Otherwise, the modified crank gear may be so configured as to have an increased ellipticity, thereby providing an effective pedaling correction means.

As described above, the pedaling correction device of the invention may be used to make the cyclist physically experience the variations of load generated in one pedal stroke (torque variations) at any speed range, so that the cyclist may naturally learn to exert the pressure on the pedal at an optimum crank angular position. Therefore, the cyclist may be efficiently trained for the pedaling.

Using the pedaling correction device of the invention in this manner, the cyclist succeeds in learning to bodily sense the crank angular position at which the cyclist should exert the maximum pressure upon the pedal. Then, the cyclist is able to efficiently use his(her) stamina in actually pedaling the bicycle equipped with the circular crank gear on the road. Therefore, the cyclist is able to pedal the bicycle at high speed for long hours. In addition, fatigue is reduced notably because the cyclist has learned not to exert unnecessary pressure upon the pedal.

## Claims

1. A bicycle-pedaling correction device comprising a crank gear having a crank with a pedal at its distal end mounted on a central axis thereof and rotating in conjunction with the rotation of the crank, wherein pedaling conditions of a cyclist are observed and a configuration of the crank gear is modified in a manner that a vertical radius of the crank gear is increased when the crank reaches a crank angular position where the cyclist needs to exert an increased pressure upon the pedal whereas the vertical radius of the crank is decreased when the crank reaches a crank angular position where the cyclist needs to reduce the pressure upon the pedal.
